# FASCICULE DE BREVET EUROPEEN

(11) **EP 3 034 483 B1**
(45) Date de publication et mention de la délivrance du brevet: **14.08.2019**
(21) Numéro de dépôt: 15200498.2
(22) Date de dépôt: 16.12.2015
(51) Int. Cl.: C04B 35/50, C04B 35/622, C04B 35/626, C04B 38/04, C04B 38/06, B01J 23/10, B01J 35/10, B01J 35/08, B01J 37/06, B01J 37/08, B01J 37/30, C04B 111/00

(54) **PROCÉDÉ DE PRÉPARATION D'UN SUBSTRAT EN CÉRAMIQUE OXYDE METTANT EN OEUVRE UNE RÉSINE ÉCHANGEUSE D'IONS**
HERSTELLUNGSVERFAHREN EINES SUBSTRATS AUS OXID-KERAMIK, BEI DEM EIN IONENTAUSCHERHARZ ZUM EINSATZ KOMMT
METHOD FOR PREPARING AN OXIDE CERAMIC SUBSTRATE USING AN ION EXCHANGE RESIN

(30) Priorité: 16.12.2014 FR 1462550
(43) Date de publication de la demande: 22.06.2016
(73) Titulaire: Commissariat à l'Énergie Atomique et aux Énergies Alternatives, 75015 Paris (FR)
(72) Inventeur: DELAHAYE, Thibaud, 30300 Tresques (FR); CAISSO, Marie, 38100 Grenoble (FR); PICART, Sébastien, 30400 Villeneuve les Avignon (FR)
(74) Mandataire: Brevalex

(56) Documents cités:
- WO-A1-2007/062356
- WO-A1-2010/124402
- US-A- 3 438 749
- US-A- 4 797 139
- KIM H ET AL: "FABRICATION OF HIGHLY POROUS YTTRIA-STABILIZED ZIRCONIA BY ACID LEACHING NICKEL FROM A NICKEL-YTTRIA-STABILIZED ZIRCONIA CERMET", JOURNAL OF THE AMERICAN CERAMIC SOCIETY, BLACKWELL PUBLISHING, MALDEN, MA, US, vol. 85, no. 6, juin 2002 (2002-06), pages 1473-1476, XP001114802, ISSN: 0002-7820
- YIN Y ET AL: "SYNTHESIS AND CHARACTERIZATION OF MESOSCOPIC HOLLOW SPHERES OF CERAMIC MATERIALS WITH FUNCTIONALIZED INTERIOR SURFACES", CHEMISTRY OF MATERIALS, AMERICAN CHEMICAL SOCIETY, US, vol. 13, no. 4, avril 2001 (2001-04), pages 1146-1148, XP001083273, ISSN: 0897-4756, DOI: 10.1021/CM000933U
- MARIE CAISSO ET AL: "Nanostructured gadolinium-doped ceria microsphere synthesis from ion exchange resin: Multi-scale in-situ studies of solid solution formation", JOURNAL OF SOLID STATE CHEMISTRY, vol. 218, October 2014 (2014-10), pages 155-163, XP055432472, US ISSN: 0022-4596, DOI: 10.1016/j.jssc.2014.06.028
- SEUNG-YOUNG PARK ET AL: "Preparation of highly porous NiO-gadolinium-doped ceria nano-composite powders by one-pot glycine nitrate process for anode-supported tubular solid oxide fuel cells", JOURNAL OF ASIAN CERAMIC SOCIETIES, vol. 2, no. 4, 4 August 2014 (2014-08-04), pages 339-346, XP055432515, ISSN: 2187-0764, DOI: 10.1016/j.jascer.2014.07.005

## Description

### DOMAINE TECHNIQUE

L'invention a trait à un procédé de préparation d'un substrat comprenant au moins une céramique oxyde à partir d'une résine échangeuse d'ions. Le procédé de préparation de l'invention permet d'obtenir un substrat à composition et porosité contrôlées, c'est-à-dire qu'il peut se présenter sous forme d'un substrat avec une composition chimique précise au niveau de la céramique oxyde et une taille de pores et une répartition de ceux-ci contrôlées.

De par leur nature, à savoir le fait qu'ils soient en céramique oxyde, les substrats obtenus par le procédé de l'invention présentent les propriétés inhérentes à une céramique oxyde, à savoir, le caractère réfractaire, la stabilité thermique ou chimique dans une large gamme de milieux.

Au vu des propriétés physico-chimiques susmentionnées, l'invention peut ainsi trouver application, par exemple, comme membranes, dans un spectre très large de domaines d'applications, tel que le domaine de l'extraction (par exemple, l'extraction solide/liquide, l'extraction solide/gaz), la séparation, la filtration mais aussi l'activation de réactions chimiques notamment dans l'hydrométallurgie, la pétrochimie ou encore la catalyse hétérogène.

### ÉTAT DE LA TECHNIQUE ANTÉRIEURE

Plusieurs voies de synthèse de substrats en céramique oxyde ont déjà été proposées dans l'art antérieur, notamment par des voies impliquant un mélange de poudres, tel qu'une voie impliquant un pressage à sec de poudres ou encore la voie impliquant l'utilisation de poudre(s) en suspension, telle que le coulage en moule de barbotine (connu avec la terminologie anglo-saxonne « slip-casting ») comme décrit dans Ceramic International, 40 (2014) 5299-5305.

Cependant, ces techniques de mise en forme présentent certaines limites. En effet, elles ont été développées pour fabriquer des céramiques denses et sont parfois difficiles à adapter pour obtenir des substrats poreux. Elles sont par ailleurs tributaires de la taille de particules des poudres mises en jeux.

Plus spécifiquement, concernant la technique impliquant l'utilisation de suspensions de poudre, il s'avère parfois très difficile de gérer des réseaux macroporeux, qui nécessitent la réalisation de barbotines/suspensions stables de larges particules (par exemple, des particules de diamètre > 10 µm) mais aussi mésoporeux qui font intervenir l'emploi de particules nanométriques qui présentent de fortes tendances à s'agglomérer, et qui sont donc difficiles à maintenir dispersées pour obtenir des suspensions stables.

Une solution qui a été proposée pour répondre à ces limites est le développement de procédés basés sur le coulage de gel (correspondant à la terminologie anglo-saxonne « gel casting »), tel que décrit dans Journal of the European Ceramic Society, 31 (2011) 2569-2591. Cette technique est un procédé par voie humide faisant intervenir des colloïdes. A la différence des voies sèches qui font intervenir des poudres, cette méthode permet un meilleur contrôle de l'interaction particule/particule et conduit à une homogénéité élevée des phases en présence (phase solide et fluide porteur). Cette méthode à bas coût permet une mise en forme rapide de pièces céramiques complexes. Cependant, les procédés basés sur le coulage de gel font souvent intervenir des composés toxiques et nécessitent des optimisations parfois complexes, afin de limiter les phénomènes d'exfoliation de surface et/ou d'accumulation de contraintes internes dans le corps vert (c'est-à-dire la céramique non traitée thermiquement).

L'article de Hyuk Kim et al. "Fabrication of Highly Porous Yttria-Stabilized Zirconia by Acid Leaching Nickel-Yttria-Stabilized Zirconia Cermet" (J. Am. Ceram. Soc., 85 [6] 1473-76, 2002) décrit la synthèse d'une zircone poreuse stabilisée par de l'oxyde d'yttrium à partir de matériaux composites NiO/YSZ formés par "tape casting".

L'article de Marie Caisso et al. "Nanostructured gadolinium-doped ceria microsphere synthesis from ion exchange resin: Multi-scale in-situ studies of solid solution formation" (Journal of Solid State Chemistry 218, 155-163, 2014) décrit l'utilisation d'une résine échangeuse d'ions pour former des micro-sphères nanostructurées d'une solution solide Ce_{0.8}Gd_{0.2}O_{2-ð}.

Aussi, au vu de ce qui existe, les Inventeurs se sont fixé pour objectif de mettre au point un procédé de préparation d'un substrat en céramique oxyde qui ne nécessite pas l'utilisation de poudres, qu'elles soient sèches ou en suspension et qui ne nécessite pas également l'utilisation d'un gel et des inconvénients en découlant comme mentionnés ci-dessus.

Qui plus est, les Inventeurs se sont fixé pour objectif de mettre au point un procédé de préparation d'un substrat en céramique oxyde, dont la composition et la porosité peuvent être contrôlées.

### EXPOSÉ DE L'INVENTION

Ainsi, l'invention a trait à un procédé de préparation d'un substrat comprenant une première céramique oxyde comprenant successivement :
a) une étape de mise en contact avec une résine échangeuse d'ions d'une solution aqueuse comprenant un ou plusieurs éléments chimiques, dit premier(s) élément(s) chimique(s), destinés à entrer dans la constitution de la première céramique oxyde, et un ou plusieurs éléments chimiques, dit second(s) élément(s) chimique(s), destinés à entrer dans la constitution d'une seconde céramique oxyde, le ou lesdits premiers éléments chimiques et le ou lesdits seconds éléments chimiques étant sous forme ionique, moyennant quoi le ou lesdits premiers éléments chimiques et le ou lesdits seconds éléments chimiques restent fixés par échange ionique à la résine ;
b) une étape de traitement thermique de ladite résine sous atmosphère oxydante pour former un mélange comprenant ladite première céramique oxyde et ladite seconde céramique oxyde ;
c) une étape d'élimination sélective de ladite seconde céramique oxyde, moyennant quoi il subsiste le substrat comprenant une première céramique oxyde.

Ainsi, le procédé de l'invention est un procédé qui ne fait pas intervenir la technique de la métallurgie des poudres pour former le substrat et les inconvénients en découlant, tels que notamment la manipulation des poudres, qui peuvent présenter un caractère cancérogène, mutagène et/ou reprotoxiques (ce qui est le cas, par exemple, des poudres de NiO) et, a *fortiori,* la mise en oeuvre de mélange à sec à partir de ces poudres, ce qui présenterait des risques de dissémination de fines particules et engendrerait la nécessité d'engager des investissements en matière de confinement (par exemple, mise en place de boîte à gants, de salles blanches).

En revanche, le procédé de l'invention utilise la capacité d'une résine échangeuse d'ions à fixer à la fois le ou lesdits éléments chimiques, dit premier(s) élément(s) chimique(s), destinés à entrer dans la constitution de la première céramique oxyde destinée à constituer ledit substrat et le ou lesdits éléments chimiques, dit second(s) élément(s) chimique(s), destinés à constituer la seconde céramique oxyde destinée à constituer un matériau sacrifiel. La fixation se fait par échange entre les contre-ions portés par des groupes échangeurs de la résine et le ou les premiers et seconds éléments chimiques présents sous forme ionique (libre ou complexée) dans la solution.

A travers l'utilisation de résine échangeuse d'ions, la fixation ionique étant réalisée à l'échelle atomique, le procédé de l'invention permet de bénéficier d'une répartition homogène du ou des premiers éléments chimiques et du ou des seconds éléments chimiques dans le mélange d'oxydes obtenu à l'étape b) et, par conséquent, de permettre un contrôle de la porosité lorsque la seconde céramique oxyde est éliminée.

Par ailleurs, la composition du substrat peut être parfaitement ajustée en jouant sur la composition de la solution utilisée dans l'étape a) comme, plus particulièrement, la proportion du ou des premiers éléments chimiques dans la solution.

Comme mentionné ci-dessus, la première céramique oxyde comprend un ou des premiers éléments chimiques et la seconde céramique oxyde comprend un ou des seconds éléments chimiques.

Le ou lesdits éléments chimiques susceptibles d'entrer dans la composition de la première céramique oxyde et de la seconde céramique oxyde peuvent être choisis parmi les éléments appartenant à la catégorie des éléments de transition, des éléments lanthanides, des éléments actinides ou des éléments choisis parmi Al, Ga, Ge, In, Sn, Sb, Tl, Pb, Bi et Y. Plus spécifiquement, il peut s'agir, pour le ou les premiers éléments chimiques, d'un élément lanthanide, tel que le cérium, le gadolinium.

Plus spécifiquement, il peut s'agir, pour le ou les seconds éléments chimiques, d'un élément métallique, tel qu'un élément de transition.

A titre d'exemple, le premier élément chimique peut être du cérium et le second élément chimique peut être du cuivre ou du nickel.

Il s'entend que le ou les éléments chimiques susceptibles d'entrer dans la composition de la première céramique oxyde et de la seconde céramique oxyde sont des éléments distincts, de sorte à permettre l'élimination sélective de la seconde céramique sans que cette élimination concerne la première céramique destinée à constituer le substrat. Il s'entend également que le ou les seconds éléments chimiques seront choisis de sorte, lors de l'étape b), à former un oxyde séparé de celui formé par le ou les premiers éléments chimiques.

Avant la mise en oeuvre de l'étape a), le procédé de l'invention peut comprendre une étape de préparation de la solution aqueuse comprenant le ou lesdits premiers éléments chimiques et le ou lesdits seconds éléments chimiques sous forme ionique (libre ou complexée).

Cette solution aqueuse peut être obtenue par dissolution d'au moins un sel du ou des premiers éléments chimiques et d'au moins un sel du ou des seconds éléments métalliques dans une solution aqueuse, ce ou ces sels pouvant être des nitrates, étant entendu que les sels sont introduits dans la solution aqueuse dans des quantités prédéterminées en fonction de la composition et de la porosité du substrat que l'on souhaite obtenir.

Concernant le ou les premiers éléments chimiques, ces quantités prédéterminées peuvent correspondre aux proportions stoechiométriques de ces éléments dans le substrat visé.

Comme mentionné ci-dessus, l'étape a) consiste à mettre en contact avec une résine échangeuse d'ions d'une solution aqueuse comprenant un ou plusieurs éléments chimiques, dit premier(s) élément(s) chimique(s), destinés à entrer dans la constitution de la première céramique oxyde et un ou plusieurs éléments chimiques, dit second(s) élément(s) chimiques, destinés à entrer dans la constitution d'une seconde céramique oxyde, moyennant quoi le ou lesdits premiers éléments chimiques et le ou lesdits seconds élément chimiques restent fixés à la résine.

Classiquement, une résine échangeuse d'ions est un polymère tridimensionnel (par exemple, de la famille des polymères polyacryliques) comprenant des groupements ionisés ou ionisables, qui lui confère des propriétés d'échangeur d'ions.

Lorsque le ou les premiers éléments chimiques et le ou les seconds éléments chimiques se présentent sous forme cationique, la résine échangeuse d'ions est, avantageusement, une résine échangeuse de cations, tel que par exemple, une résine comprenant des groupes carboxylates portant des ions NH₄⁺, ces derniers étant aptes à s'échanger avec le ou les premiers et seconds éléments chimiques sous forme cationique.

Les résines utilisées peuvent se présenter sous diverses formes, telles que des formes compactées (par exemple, des cylindres, des membranes, des granulés ou des microsphères), des formes divisées comme les poudres.

A titre d'exemple, les résines peuvent se présenter sous forme de billes ou de microsphères.

Les résines présentent également avantageusement une porosité contrôlée, par exemple, avec une homogénéité dans la taille et la répartition des pores.

A titre d'exemples, les résines utilisées dans le cadre de l'invention peuvent être des résines résultant de la (co)polymérisation de l'acrylonitrile avec un agent de réticulation, notamment le divinylbenzène (DVB). Il faudra prévoir, après polymérisation, une étape d'hydrolyse des groupes -CN en groupes carboxyliques.

Des résines commerciales pouvant être utilisées pour la mise en oeuvre du procédé de l'invention peuvent être les résines fournies par Rohm&Haas, telles que les résines IMAC HP 333.

La résine échangeuse de cations choisie peut être amenée à subir une ou plusieurs étapes de traitement avant passage de la solution de charge, parmi lesquelles on peut citer :
- une étape de calibrage, par voie humide, de sorte à isoler la fraction granulométrique désirée, par exemple, une fraction allant de 600 à 800 µm ;
- au moins une étape de lavage en mettant en oeuvre un cycle de traitement acide et basique avec de de l'acide nitrique et de l'ammoniaque suivie d'une étape de rinçage à l'eau déminéralisée ;
- une étape de séchage après l'étape de rinçage ;
- une étape de tri de forme, de sorte à éliminer les particules brisées ou non sphériques, cette étape pouvant être réalisée sur une table inclinée.

On précise que l'étape de lavage susmentionnée a pour but de nettoyer la résine de toute présence de résidus de synthèse et d'ions alcalins. Ainsi, la fixation d'un groupe ammonium par réaction de neutralisation du proton des groupes carboxyliques permet un gonflement de la résine propice à un meilleur accès des pores à l'eau de lavage.

La résine peut être une résine présentant comme contre-ions, des ions ammonium.

La résine peut être utilisée, avantageusement, sous forme d'un lit dispersé dans une colonne pour former un lit de particules de résine destiné à recevoir la solution aqueuse.

L'étape de mise en contact de la solution avec la résine, consiste, en d'autres termes, en une imprégnation de la résine par la solution contenant le ou les premiers éléments chimiques et le ou lesdits seconds éléments chimiques, par exemple, via la circulation de la solution à travers le lit de résine.

Le pH de la solution aqueuse peut être fixé à un pH prédéterminé, si cela est nécessaire pour obtenir un échange optimal avec la résine échangeuse d'ions.

La solution aqueuse comprend, classiquement, des quantités prédéterminées du ou des premiers éléments chimiques métallique en fonction de la composition de substrat visée, ces quantités prédéterminées étant telles que définies ci-dessus.

Cette mise en contact (ou imprégnation) peut se dérouler selon différentes variantes.

Selon une première variante, elle peut consister à mélanger sous agitation la résine dans la solution aqueuse contenant le ou lesdits premiers éléments chimiques et le ou lesdits seconds éléments chimiques.

Selon une deuxième variante, elle peut consister à laisser écouler, par percolation, à travers un lit de résine, la solution aqueuse et à récupérer un éluat.

Selon cette variante, la résine, lorsqu'il s'agit, par exemple, d'une résine comprenant des groupes carboxyliques, échange progressivement ses protons contre les cations du ou des premiers et seconds éléments chimiques. Le pH de l'éluat diminue brusquement, lorsque débute l'échange avec la résine sous forme protonique (c'est-à-dire comprenant des groupes carboxyliques -COOH). Il remonte ensuite progressivement jusqu'à retrouver la valeur du pH de la charge d'entrée, ce qui signifie que l'échange est terminé et que la résine se trouve saturée en le ou lesdits premiers et seconds éléments chimiques. On peut ainsi stopper le passage de la solution sur la résine. En d'autres termes, on procède au passage sur la résine de la solution de charge jusqu'à obtention d'un éluat présentant une concentration identique à celle de la solution de départ.

Quelle que soit la variante envisagée, l'étape de mise en contact peut s'accompagner d'une étape de recirculation de la solution aqueuse, c'est-à-dire que chaque volume de la solution est destiné à repasser une ou plusieurs fois sur la résine échangeuse d'ions.

Quelle que soit la variante envisagée, l'étape de mise en contact peut être réalisée à une température et/ou une pression prédéterminées, dès lors que cette température et/ou cette pression prédéterminées peuvent permettre un échange ionique optimal.

Après l'étape de mise en contact, le procédé de l'invention peut comprendre une étape de lavage de la résine avec de l'eau déminéralisée, notamment en vue de chasser la charge restante dans les interstices du lit de résine.

Enfin, après l'étape de mise en contact et l'éventuelle étape de lavage, le procédé peut comprendre une étape de séchage de la résine, par exemple, à une température aux environs de 100°C, par exemple à 105°C, de sorte à provoquer l'évaporation de l'eau présente dans les pores de la résine, cette étape de séchage pouvant être réalisée dans une étuve.

Selon l'invention, la résine ainsi complexée à l'issue de l'étape a) est ensuite amenée à subir une étape de traitement thermique de ladite résine sous atmosphère oxydante pour former un mélange comprenant ladite première céramique oxyde et ladite seconde céramique oxyde.

Cette étape de traitement thermique consiste, classiquement, en une calcination destinée à éliminer le squelette organique de la résine, cette calcination pouvant se dérouler à une température pouvant aller jusqu'à 1400°C, et étant réalisée dans des conditions oxydantes (par exemple, sous air) de sorte à former les oxydes susmentionnés. Il n'est pas exclu que cette étape puisse se dérouler en plusieurs opérations, telle qu'une opération permettant l'élimination du squelette de la résine suivie d'une opération de formation des oxydes.

Cette étape de traitement thermique peut être réalisée dans un four tubulaire. A l'issue de cette étape, il résulte ainsi un mélange du ou des oxydes du ou des premiers et seconds éléments chimiques, ce mélange présentant la forme de la résine utilisée (par exemple, des microsphères, si la résine utilisée initialement se présente sous forme de microsphères).

Après l'étape b), il est mis en oeuvre une une étape d'élimination sélective de ladite seconde céramique oxyde, moyennant quoi il subsiste le substrat comprenant la première céramique oxyde.

Outre le fait que l'élimination sélective permette de créer une porosité additionnelle ouverte, elle permet aussi d'augmenter la surface active du substrat.

Cette étape d'élimination sélective peut consister en la dissolution de la seconde céramique oxyde par utilisation d'un agent chimique apte à dissoudre ladite seconde céramique oxyde sans dissoudre ladite première céramique oxyde.

A titre d'exemple, lorsque le mélange d'oxyde comprend de la cérine CeO₂ comme première céramique oxyde et de l'oxyde de cuivre CuO ou de l'oxyde de nickel NiO comme seconde céramique oxyde, l'étape d'élimination sélective peut consister à soumettre le substrat à de l'acide nitrique, qui est apte à dissoudre l'oxyde de cuivre CuO ou l'oxyde de nickel NiO sans dissoudre la cérine CeO₂.

En plus de l'étape d'élimination sélective, la porosité finale du substrat peut être contrôlée en ajustant la température de calcination de la résine chargée et/ou la température du traitement de réduction, mais aussi en fonction des conditions de séchage de la résine (CO₂ super critique, lyophilisation, *etc*.), ou encore le rendement de fixation, c'est-à-dire le taux de chargement par rapport au nombre de sites disponibles.

Le substrat obtenu à l'issue du procédé de l'invention peut être utilisé tel quel ou peut être utilisé après une fonctionnalisation de surface, par exemple, par greffage chimique ou encore par imprégnation.

D'autres caractéristiques et avantages de l'invention apparaîtront mieux à la lecture du complément de description qui suit, lequel se rapporte à un exemple de préparation d'un substrat en cérine CeO₂.

Bien entendu, l'exemple qui suit n'est donné qu'à titre d'illustration de l'objet de l'invention et ne constitue en aucun cas une limitation de cet objet.

### BRÈVE DESCRIPTION DES DESSINS

La figure 1 représente un graphique du type diffractogramme des rayons X sur poudre représentant l'intensité I en fonction de l'angle 2θ (en °) pour le produit intermédiaire CeO₂-CuO obtenu à l'exemple 1.
La figure 2 représente un graphique du type diffractogramme des rayons X sur poudre représentant l'intensité I en fonction de l'angle 2θ (en °) pour le produit final CeO₂ obtenu à l'exemple 1.

### EXPOSÉ DÉTAILLÉ DE MODES DE RÉALISATION PARTICULIERS

### EXEMPLE 1

Dans cet exemple, il est procédé à la préparation d'un substrat en cérine CeO₂.

Pour ce faire, une résine de type polyacrylique se présentant sous forme de microsphères et convertie sous forme ammonium est introduite dans une colonne et chargée par recirculation d'une solution aqueuse contenant, à la fois, des ions Ce³⁺ et Cu²⁺ dans les proportions atomiques suivantes (20/80). Cette solution de chargement est obtenue par dissolution en milieu aqueux de nitrate de cérium et de nitrate de cuivre dans les proportions stoechiométriques susmentionnées. Après chargement, la résine est rincée afin d'éliminer toute trace de cations non fixés puis est séchée 12 heures dans une étuve à 100°C. La résine ainsi chargée est calcinée sous air à 800°C pendant 1 heure, en mettant en oeuvre le cycle thermique suivant :
- une étape de chauffage de 298 K jusqu'à 623 K à raison d'une vitesse de 1K.min⁻¹ ;
- une étape de chauffage de 623 K jusqu'à 1073 K à raison d'une vitesse de 1,5 K.min⁻¹ ;
- une étape de maintien de la température à 1073 K pendant 1 heure ;
- une étape de refroidissement de 1073 K à 298 K à raison d'une vitesse de 5 K.min⁻¹.

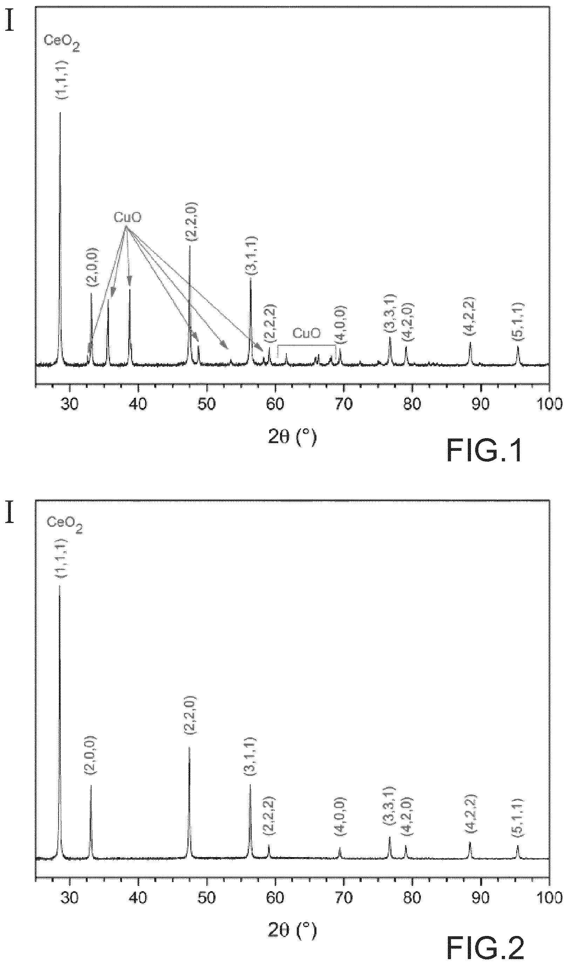

A l'issue de ce traitement, des microsphères présentant une surface spécifique de 4 m².g⁻¹ ont ainsi été synthétisées. Une partie de ces microsphères a été broyée et analysée par diffraction des rayons X sur poudre. Le diagramme obtenu témoigne de la présence d'un mélange biphasique de CeO₂ et de CuO sans formation de solution solide entre le Ce et le Cu, comme attesté par la Figure 1.

Le restant des billes a ensuite été introduit dans un milieu aqueux nitrique (HNO₃, 4M) à température ambiante, afin de dissoudre la phase CuO sans dissoudre la cérine formée très stable dans ce milieu. Le but de cette étape de dissolution est d'accroître la surface active de la cérine résiduelle.

Des microsphères poreuses de cérine sans traces de cuivre, comme l'atteste la figure 2, présentant une surface spécifique de 17 m²/g sont alors obtenues.

En fin d'expérience, les microsphères de cérine synthétisées ont conservé la sphéricité de la matrice résine de départ. Aucune déformation des microsphères n'est observée. La surface spécifique élevée obtenue après dissolution de l'oxyde de cuivre permet de bénéficier d'une cérine présentant une forme sphérique et une réactivité élevée.

## Revendications

1. Procédé de préparation d'un substrat comprenant une première céramique oxyde comprenant successivement :
a) une étape de mise en contact avec une résine échangeuse d'ions d'une solution aqueuse comprenant un ou plusieurs éléments chimiques, dit premier(s) élément(s) chimique(s), destinés à entrer dans la constitution de la première céramique oxyde, et un ou plusieurs éléments chimiques, dit second(s) élément(s) chimique(s), destinés à entrer dans la constitution d'une seconde céramique oxyde, le ou lesdits premiers éléments chimiques et le ou lesdits seconds éléments chimiques étant sous forme ionique, moyennant quoi le ou lesdits premiers éléments chimiques et le ou lesdits seconds éléments chimiques restent fixés par échange ionique à la résine ;
b) une étape de traitement thermique de ladite résine sous atmosphère oxydante pour former un mélange comprenant ladite première céramique oxyde et ladite seconde céramique oxyde ;
c) une étape d'élimination sélective de ladite seconde céramique oxyde, moyennant quoi il subsiste le substrat comprenant une première céramique oxyde.

2. Procédé de préparation d'un substrat selon la revendication 1, dans lequel le ou lesdits éléments chimiques susceptibles d'entrer dans la composition de la première céramique oxyde et de la seconde céramique oxyde sont choisis parmi les éléments appartenant à la catégorie des éléments de transition, des éléments lanthanides, des éléments actinides ou des éléments choisis parmi Al, Ga, Ge, In, Sn, Sb, Tl, Pb, Bi et Y.

3. Procédé de préparation d'un substrat selon la revendication 1 ou 2, dans lequel le ou lesdits premiers éléments chimiques sont choisis parmi les éléments lanthanides.

4. Procédé de préparation d'un substrat selon l'une quelconque des revendications précédentes, dans lequel le ou lesdits seconds éléments chimiques sont choisis parmi les éléments métalliques.

5. Procédé de préparation d'un substrat selon l'une quelconque des revendications précédentes, dans lequel le premier élément chimique est le cérium et le second élément chimique est le cuivre ou le nickel.

6. Procédé de préparation d'un substrat selon l'une quelconque des revendications précédentes, comprenant, avant la mise en oeuvre de l'étape a), une étape de préparation de la solution aqueuse comprenant le ou lesdits premiers éléments chimiques et le ou lesdits seconds éléments chimiques sous forme ionique.

7. Procédé de préparation d'un substrat selon la revendication 6, dans lequel l'étape de préparation de la solution aqueuse consiste à dissoudre au moins un sel du ou des premiers éléments chimiques et au moins un sel du ou des seconds éléments chimiques dans une solution aqueuse.

8. Procédé de préparation d'un substrat selon l'une quelconque des revendications précédentes, dans lequel l'étape de mise en contact a) consiste à imprégner la résine par la solution aqueuse contenant le ou lesdits premiers éléments chimiques et le ou lesdits seconds éléments chimiques.

## Patentansprüche

1. Verfahren zum Herstellen eines Substrats, das eine erste Oxidkeramik enthält, nacheinander umfassend:
a) einen Schritt des Inkontaktbringens mit einem lonenaustauscherharz einer wässrigen Lösung, enthaltend ein oder mehrere chemische Elemente, erste(s) chemische(s) Element(e) genannt, die dazu bestimmt sind, in die Konstitution der ersten Oxidkeramik einzutreten, und ein oder mehrere chemische Elemente, zweite(s) chemische(s) Element(e) genannt, die dazu bestimmt sind, in die Konstitution einer zweiten Oxidkeramik einzutreten, wobei das bzw. die ersten chemischen Elemente und das bzw. die zweiten chemischen Elemente in ionischer Form vorliegen, wodurch das bzw. die ersten chemischen Elemente und das bzw. die zweiten chemischen Elemente durch lonenaustausch an das Harz gebunden bleiben;
b) einen Schritt der Wärmebehandlung des Harzes in einer oxidierenden Atmosphäre, um ein Gemisch zu bilden, das die erste Oxidkeramik und die zweite Oxidkeramik enthält;
c) einen Schritt des selektiven Entfernens der zweiten Oxidkeramik, wodurch das Substrat mit einer ersten Oxidkeramik bestehen bleibt.

2. Verfahren zum Herstellen eines Substrats nach Anspruch 1, wobei das bzw. die chemischen Elemente, die in die Zusammensetzung der ersten Oxidkeramik und der zweiten Oxidkeramik eintreten, aus den Elementen ausgewählt sind, die zur Kategorie der Übergangselemente, der Lanthanidelemente, der Aktinidelemente oder der Elemente, ausgewählt aus Al, Ga, Ge, In, Sn, Sb, Tl, Pb, Bi und Y, gehören.

3. Verfahren zum Herstellen eines Substrats nach Anspruch 1 oder 2, wobei das bzw. die ersten chemischen Elemente aus Lanthanidelementen ausgewählt sind.

4. Verfahren zum Herstellen eines Substrats nach einem der vorangehenden Ansprüche, wobei das bzw. die zweiten chemischen Elemente aus Metallelementen ausgewählt sind.

5. Verfahren zum Herstellen eines Substrats nach einem der vorangehenden Ansprüche, wobei das erste chemische Element Cerium und das zweite chemische Element Kupfer oder Nickel ist.

6. Verfahren zum Herstellen eines Substrats nach einem der vorangehenden Ansprüche, umfassend vor dem Ausführen von Schritt a) einen Schritt des Herstellens der wässrigen Lösung, die das bzw. die ersten chemischen Elemente und das bzw. die zweiten chemischen Elemente in ionischer Form enthalten.

7. Verfahren zum Herstellen eines Substrats nach Anspruch 6, wobei der Schritt des Herstellens der wässrigen Lösung darin besteht, zumindest ein Salz des bzw. der ersten chemischen Elemente und zumindest ein Salz des bzw. der zweiten chemischen Elemente in einer wässrigen Lösung zu lösen.

8. Verfahren zum Herstellen eines Substrats nach einem der vorangehenden Ansprüche, wobei der Schritt a) des Inkontaktbringens darin besteht, das Harz mit der wässrigen Lösung zu imprägnieren, die das bzw. die ersten chemischen Elemente und das bzw. die zweiten chemischen Elemente enthält.

## Claims

1. A process for preparing a substrate comprising a first oxide ceramic successively comprising:
a) a step of contacting with a ion exchange resin an aqueous solution comprising one or more chemical elements, called first chemical element(s), for being contained in the first oxide ceramic, and one or more chemical elements, called second chemical element(s), for being contained in a second oxide ceramic, said first chemical element(s) and said second chemical element(s) being in ionic form, whereby said first chemical element(s) and said second chemical element(s) remain attached to the resin by ion exchange;
b) a step of heat treating said resin under oxidising atmosphere to form a mixture comprising said first oxide ceramic and said second oxide ceramic;
c) a step of selectively removing said second oxide ceramic, whereby the substrate comprising a first oxide ceramic remains.

2. The process for preparing a substrate according to claim 1, wherein said chemical element(s) likely to be contained in the first oxide ceramic and the second oxide ceramic are chosen from elements belonging to the category of transition elements, lanthanide elements, actinide elements or elements chosen from Al, Ga, Ge, In, Sn, Sb, Tl, Pb, Bi and Y.

3. The process for preparing a substrate according to claim 1 or 2, wherein said first chemical element(s) are chosen from lanthanide elements.

4. The process for preparing a substrate according to any of the preceding claims, wherein said second chemical element(s) are chosen from metal elements.

5. The process for preparing a substrate according to any of the preceding claims, wherein the first chemical element is cerium and the second chemical element is copper or nickel.

6. The process for preparing a substrate according to any of the preceding claims, comprising, before implementing step a), a step of preparing the aqueous solution comprising said first chemical element(s) and said second chemical element(s) in ionic form.

7. The process for preparing a substrate according to claim 6, wherein the step of preparing the aqueous solution consists in dissolving at least one salt of the first chemical element(s) and at least one salt of the second chemical element(s) in an aqueous solution.

8. The process for preparing a substrate according to any of the preceding claims, wherein the contacting step a) consists in impregnating the resin with the aqueous solution containing said first chemical element(s) and said second chemical element(s).
